# EUROPEAN PATENT APPLICATION

(11) **EP 1 455 432 A2**
(43) Date of publication of application: **08.09.2004**
(21) Application number: 03405510.3
(22) Date of filing: 09.07.2003
(51) Int. Cl.: H02K 3/24

(54) **Cooling and cable support tubing member and arrangement for a generator, and a method thereof**

(30) Priority: 06.03.2003 US 452111
(71) Applicant: ALSTOM Technology Ltd, 5400 Baden (CH)
(72) Inventor: Jonson, Leif, 72216 Vasteras (SE)

(57) **Abstract**

The present invention relates to a tubing member (2, 2', 2") for cooling and support of high voltage cables (4, 4') used as stator windings inside the stator core (20) of a generator, the tubing member has short and long side walls (6-9) extending in a longitudinal direction, which walls forms a closed, elongated, hollow channel (10) for a cooling liquid, that at least one of the long sides (8, 8') has a concave shape (12) such that a tapering central-portion (14) of the channel is formed between the long sides of the tubing, and further that the at least one long side towards the short sides diverge whereby a propagating side-portion (16, 16') of the channel is provided adjacent the short sides (6, 7), respectively. The present invention also relates to an arrangement and a method.

## Description

### Technical field

The present invention relates to a tubing member for cooling and support of high voltage cables used as stator windings inside the stator core of a generator. The present invention also relates to an arrangement and a method.

### Background

Powerformer™ is a new concept for high voltage generators and has resulted in a revolution in the field of power generation. High voltage generators based on Powerformer™ technology uses high voltage cables as the stator winding instead of the traditional medium voltage stator bars which are used in stators of conventional generators. Pluralities of cables are arranged in parallel throughout the stator core in the longitudinal direction. The stator core is made up of iron sheets arranged side by side in the longitudinal direction of the core, which sheets extends radially around the centrally positioned rotor of the generator. Openings are provided through the core, in its longitudinal direction, for the parallel running cables. The openings have radially shaped cuttings, which cuttings corresponds to the outer radius of the cable, in order to provide for a sufficient support and secure contact between the cable and the adjacent stator core. The secure contact is important due to the fact that the cables have an outer semi-conducting plastic layer, usually made of polyethylene such as PEX, which layer has to be grounded by contact with the core. The cables also have an intermediate insulating plastic layer surrounding the copper core. Hitherto, in order to reach a secure contact between the cables and the core, a triangular strip of rubber is arranged in the openings, in gaps adjacent the cables. The purpose with the strips is to push a cable in firm contact with the core.

During operation, the cables generate a considerable amount of heat. Therefore the cables have to be cooled to avoid softening of the plastic layers in the cable. If e.g. PEX is used as insulating material the temperature has to be kept below about 70°C. When the heat makes the plastics too soft, the cable becomes out of round, resulting in an irregular electrical field which decreases the capacity of the cable.

Today, separate cooling channels arranged in the stator core provide the cooling of the cables, which cooling channels are arranged at a distance from the openings in which the rows of parallel running cables are positioned. The cooling channels reduce the temperature in the sheets which forms the stator core and the heat from the cables are conducted via the sheets. However, the number of cooling channels, as well as the cross-sectional size of these cooling channels, is limited by the fact that too much void space in the core reduces the magnetic flux density. As a consequence due to the limiting cooling facilities, the current density of the cables is also limited since increased current density generated enhance the amount of heat produced by the cables.

### Description of the invention

The object of the present invention is to eliminate the drawbacks associated with the prior art technology. Yet an object is to increase the cooling capacity in the stator core and thus the ability to increase the overall capacity of a high voltage generator. Another object of the present invention is to provide a technically solution that is cost efficient, uncomplicated to produce and which is easy to apply.

Accordingly, in accordance with a first aspect of the present invention, there is provided a tubing member for cooling and support of high voltage cables used as stator windings inside the stator core of a generator. The tubing has short and long side walls extending in a longitudinal direction. Said walls forms a closed, elongated, hollow channel for a cooling liquid. At least one of the long sides has a concave shape such that a tapering central portion of the channel is formed between the long sides of the tubing member. The at least one long side towards the short sides diverge whereby a propagating side-portion of the channel is provided adjacent the short sides, respectively.

Preferably, also the other long side of the tubing member has a concave shape, particularly when placed in between two adjacent cables. However, a tubing member having one concave long side wall and one plane long side wall, is intended to be used at either ends in the opening.

According to a second aspect of the present invention there is provided an arrangement for cooling and support of high voltage cables used as stator windings inside the stator core of a generator. The arrangement comprises intermediate tubing members arranged in contact with neighbouring cables running inside a plurality of elongated openings formed in the stator core along its longitudinal direction. Each tubing member has short and long side walls extending in a longitudinal direction. Said walls forms a closed, elongated, hollow channel for a cooling liquid. The long sides of each tubing member has a concave shape which forms a contact surface against each cable. The concave shape forms a tapering central portion of the channel between the long sides of the tubing member. The long sides towards the short sides diverge whereby a propagating side-portion of the channel is provided adjacent the short sides, respectively. Each short side wall of the tubing member is arranged in contact with the surrounded surfaces in the opening of the stator core.

Thus, by the tubing member according to the present invention, a new and easy way to improve the cooling in the stator core of a high voltage generator can be achieved. Due to the concave shape of the tubing, large and smooth rest surfaces against the cable and the surrounding walls in the opening are provided. Thus, the tubing member has a large contact surface to adjacent arranged cable, which greatly enhances the heat transfer capacity, whereby the current density and the efficiency of the generator can be increased. The constructional features of the tubing member makes it possible to convey a higher flow of a cooling liquid, such as cooling water. The propagating side-portions against the short sides provides for a long contact surface against the stator core, which also makes it possible to transfer heat from the core itself. In fact, by using the tubing member according to the present invention, it is possible to eliminate more or less, the need for separate cooling channels in the stator core, and the magnetic flux density and consequently the capacity of the generator can be increased. Further, the tubing member provides an improved support of the cables due to large contact surface between channel and cable, which involve small contact pressure and which minimises the risk for damages to occur on the cable. Moreover, the openings in the core can be made simpler.

According to an embodiment of the present invention, a radius of the concave long side at compressed state may correspond to a radius of a cable against which concave surface it is intended to arranged the cable.

Suitably, the transverse extension of the tubing member is asymmetric, whereby the propagating side-portions of the channel adjacent the short sides, respectively, can be displaced relatively a transverse centre axle of the tubing member. Furthermore, one first side-portion towards one short side may then has its centre displaced in the opposite direction, relative the centre axle, compared to the centre of the other second side-portion towards the other short side. These asymmetrical shapes of the tubing member provide for that each long side of the tubing member has a longer contact surface to the cable. The use of an asymmetrical shaped for the tubing member in the arrangement according to the present invention results in that the cables then will be arranged asymmetrical in each opening of the stator core positioned along a radial centre axle of the opening. Every other cable is alternately arranged with a displacement at opposite directions relative the centre axle.

Preferably, the walls of the tubing and/or an end fitting of the tubing member can be made of a semi-conducting material, in order to provide for a grounded indirect contact of the cable via the tubing member. This can be important, especially in accordance with a preferred embodiment of the present invention where the cable has no direct contact with the core but is only supported by the tubing members in the openings in the core.

In order to provide for that a secure contact between the tubing members, the cables and to the adjacent side surfaces of the openings is obtained, the walls of the tubing member may comprise an elastic material, such a plastic elastomer. A suitable plastic is polyethylene, especially cross-linked polyethylene, which in addition can be made semi-conducting. Cross-linked polyethylene is also commonly used for the outer layer of the cables, and therefore it is also suitable for the walls of the tubing member.

With respect to the arrangement according to the second aspect of the present invention, each propagating side-portion of one channel against one side of the cable can be arranged in contact to another channel arranged on another side of said cable. Thereby, an enhanced cooling effect can be obtained, as well as improved security regarding the grounding of the cables.

Moreover, a conduit for providing cooling liquid to the channel of the tubing member can be arranged to each tubing member, respectively.

The present invention also relates to a method for cooling and support of high voltage cables used as stator windings inside the stator core of a generator, the cables are arranged inside a plurality of elongated openings formed in the stator core along its longitudinal direction, the method includes the use of tubing members that has short and long side walls extending in a longitudinal direction, which walls forms a closed, elongated, hollow channel for a cooling liquid, the long sides of each tubing member has a concave shape, the method comprising the steps of: arranging each tubing member in between neighbouring cables in each opening, compressing the tubing members in the opening against the cables by introducing compression means in the opening, such that a close firm contact is maintained between the cable and the concave long side of the tubing as well as between the short sides of the tubing members and the surface of the core in the opening, supplying a continuous stream of a cooling liquid in the channels whereby heat generated in the cables, as well as heat generated in the stator core, is transferred to, and brought off with, the cooling liquid.

Preferably, the compression means is a wedge shaped member which has a narrow ending that is first introduced in the opening. The wedge shaped member is pressed in the opening until a desired compression is obtained. The compression means is suitably introduced centrally with respect to the radial extension of the opening, which minimise the risk for bending the surfaces of the opening and decrease the risk for making some of the cables to become out of round when the arrangement is compressed. Further, it decreases the risk for uneven pressure between cable and channels in the opening. These before mentioned risks may also be diminished by introducing a grease based on silicon in the opening at a position intermediate the short end walls of the tubing and the stator core. Silicon based grease is suitable since it is has satisfactory heat transferring properties. The purpose with the grease is firstly to decrease the friction against the wall to obtain an even distributed pressure, and secondly to decrease the surface thermal insulance between the core and the channel.

Cooling liquid is suitably supplied at one side in the channel of the tubing member.

### Brief description of the drawings

Embodiments of the present invention are hereinafter described more in detail, with reference to the accompanying drawings, bearing in mind however that the scope of protection of the present invention is indicated by the independent appended claims and not limited to the specific illustrative embodiments, in which drawings:
- fig. 1A: shows a schematic cross-sectional view of a tubing member,
- fig. 1B: shows schematically a cross sectional side view of an arrangement where the tubing member as shown in fig. 1A is arranged at several positions intermediate cables in an opening of a stator core,
- fig. 2A: shows a schematic sectional side view of an arrangement, essentially corresponding to the embodiment shown in fig. 1B,
- fig. 2B: shows in a cross-sectional side view one of the tubing members as used in the arrangement in fig. 2A, and
- fig. 2C: illustrates in a longitudinal cross-sectional view an end fitting used in connection with the present invention.

### Detailed description of the invention

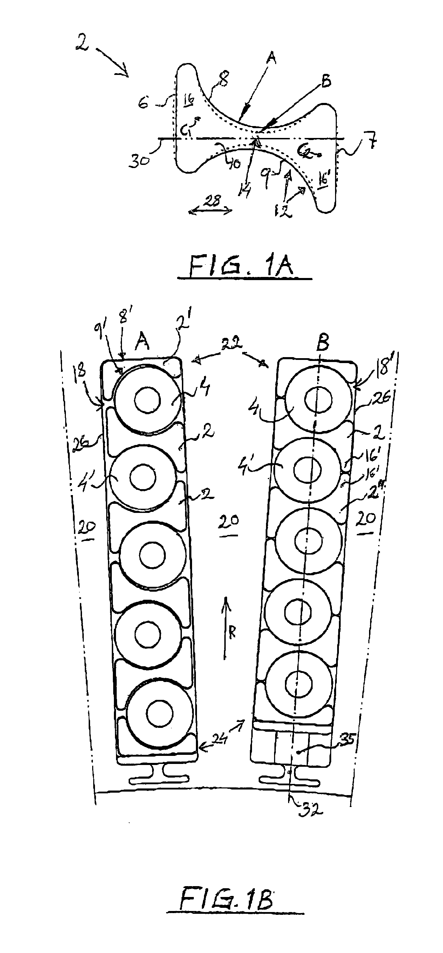

According to a first aspect of the present invention, fig. 1A shows a tubing member 2 for cooling and support of high voltage cables 4 (see fig. 1B) used as stator windings inside the stator core of a generator. The tubing member 2 has short and long side walls 6-9 extending in a longitudinal direction along the extension of the generator. The walls form a closed, elongated, hollow channel 10 for a cooling liquid. At least one of the long sides 8, 9 has a concave shape 12 such that a tapering central portion 14 of the channel is formed between the long sides of the tubing member. Towards the short sides 6, 7, the long sides 8, 9 diverge, whereby a propagating side-portion 16 of the channel 10 is provided adjacent the short sides 6, 7, respectively. The unbroken line A, shows the tubing member in an uncompressed condition whilst the broken line B shows the tubing member in a compressed condition.

Fig. 1B shows, according to the second aspect of the present invention, an embodiment of an arrangement where the tubing member as shown in fig. 1A is arranged at several positions intermediate cables in an opening 18, 18' of a stator core 20 of a Powerformer™ high voltage generator. Pluralities of high voltage cables 4 are arranged as the stator winding in parallel throughout the stator core 20 in its longitudinal direction and in parallel to a centrally positioned rotor (not shown) surrounded by the stator core 20. A tubing member 2' which has only one concave long side wall 9' and one plane long side wall 8', is intended to be used at either ends 22, 24 in the opening 18, 18'. However, when the tubing members are arranged intermediate and in contact with neighbouring cables 4, 4' running inside the openings 18, both long sides 8, 9 of each tubing member has a concave shape which forms a contact surface against each cable 4, 4'. Each short side wall 6, 7 of the tubing member is arranged in contact with the surrounded surfaces 26 of the opening 18, 18' of the stator core 20. The opening 18 on the left hand in fig. 1B shows the tubing member in an uncompressed condition A, whilst the opening 18' on the right side in fig. 1B shows the tubing member in a compressed condition B. As evident from figs. 1A and 1B, a radius of one concave long side 8, 9 may principally correspond to a radius of the neighbouring cable 4, 4'.

As shown in fig. 1A, the tubing member can be asymmetrically formed in a transverse extension 28. The propagating side-portions 16 of the channel adjacent the short sides 6, 7, respectively, can be displaced relatively a transverse centre axle 30 of the tubing member. A first side-portion 16 towards a first short side 6 may then has its centre C1 displaced in the opposite direction, relative the centre axle 30, compared to the centre C2 of the other second side-portion 16' towards the other second short side 7. These asymmetrical shapes of the tubing member provide for that each long side 8, 9 of the tubing member has a longer contact surface to the cable 4, 4'. The use of an asymmetrical shaped tubing member for the arrangement as shown in fig. 1B, results in that the cables then will be arranged in each opening 18, 18' of the stator core asymmetrically positioned along a radial centre axle 32 of the opening. Every other cable 4, 4' is alternately arranged with a displacement at opposite directions relative the centre axle 32.

As seen from fig. 1B, the cables 4, 4' have no direct contact with the stator core 20 but is only supported by the tubing members 2 in the openings 18, 18' in the core. In such a case, the tubing member can be made of a semi-conducting material, in order to provide for a grounded indirect contact of the cable via the tubing member. For the reason to provide a secure contact between the tubing members to the cables and to the adjacent side surfaces of the openings, the walls of the tubing member may also be elastic, e.g. of plastic. Thereby the compression procedure is facilitated.

As further shown in fig. 1B, right-hand opening 18', each propagating side-portion 16, 16' of one tubing member 2 against one side of the cable 4', can be arranged in contact to another corresponding side-portion 16, 16' of an adjacent tubing member 2" arranged on another side of said cable 4'. Thereby, an enhanced cooling effect can be obtained, as well as improved security regarding the grounding of the cables.

During the assembly of cables and tubing members, tubing members introduced in uncompressed condition, as shown in the left-hand opening 18 of fig 1B. When all tubing members have been introduced in the opening, they are compressed against the cables as shown in the right-hand opening 18', e.g. by inserting a tool or the similar, as further explained further down in this description.

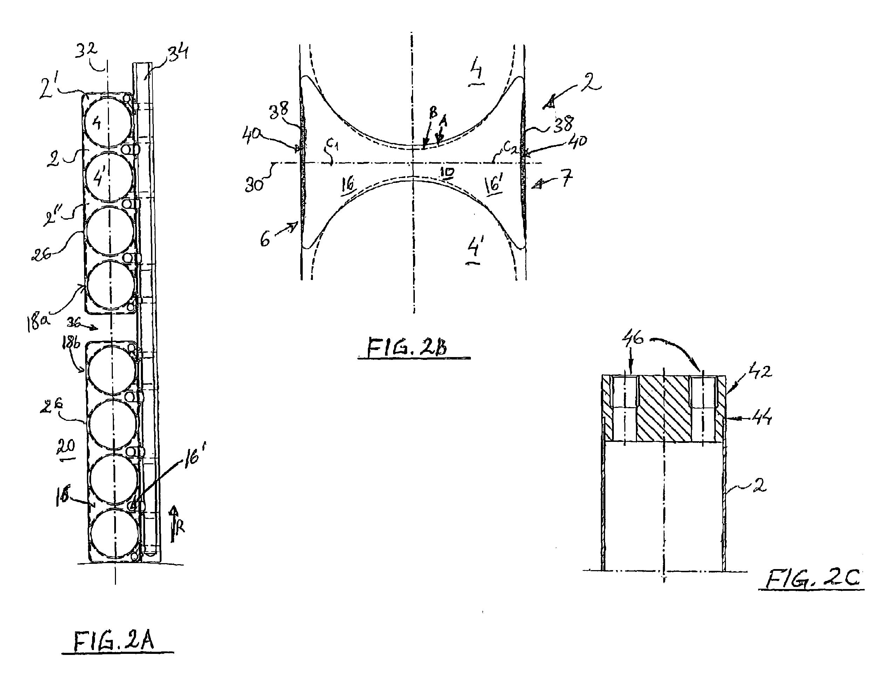

Fig. 2A shows another embodiment of an arrangement, essentially corresponding to the first embodiment shown in fig. 1B, and fig. 2B shows one of the tubing members 2 as used in the arrangement in fig. 2A. In contrast to the embodiment shown in figs. 1A and 1B, the tubing member is symmetrical. As evident from fig. 2B, the propagating side-portions 16 of the channel 10 adjacent the short sides 6, 7, respectively, are spread equally on each side of the transverse centre axle 30 of the tubing member. Hence, the centres C1, C2 of each side-portion are positioned on the centre axle 30.

As seen in fig. 2A, a conduit 34 for providing cooling liquid to the channel 10 of the tubing member can be arranged to each tubing member, respectively. One difference with the arrangement in fig 2A compared to the embodiment shown in fig. 1B, is that the propagating side-portion 16, 16' of one tubing member 2 against one side of the cable 4', are not arranged in contact to another corresponding side-portion 16, 16' of an adjacent tubing member 2" arranged on another side of said cable 4'.

As shown in fig.1B right hand opening 18', compression means, such as a wedge shaped member 35 is introduced to compress the tubing members and the cables in the opening 18. As shown in fig. 2A, it is preferred to divide one opening 18 in two halves 18a, 18b, whereby the wedge shaped member can be introduced centrally 36, with respect to the radial R extension of the opening, in a space in between the two halves. This decreases the risk for making some of the cables to become out of round when the arrangement is compressed. Further, it decreases the risk for uneven pressure between cable and channels in the opening. These before mentioned risks might also be diminished by introducing grease 38 based on e.g. silicon in the opening, as further shown in fig. 2B, at a position 40 intermediate the short end walls 6, 7 of the tubing member and the stator core. Silicon based grease is suitable since it is has satisfactory heat transferring properties. The purpose with the grease is firstly to decrease the friction against the wall to obtain an even distributed pressure. Secondly, the purpose is to decrease the surface thermal insulance between the core and the channel, due to an uneven contact surface of the stator core.

Fig. 2C illustrates an end fitting 42 used in connection with the present invention. Instead of providing the grounding of the cables via the tubing member by using semi-conducting walls, or merely as a further option, the end fitting may provide for the necessary grounding to the stator core. The end fitting is suitably glued or welded at an end 44 of a tubing member 2. The end fitting may also be provided with inlets/outlets 46 for the cooling liquid.

### List of reference numbers shown in drawings

- 2, 2', 2": tubing member
- 4, 4': high voltage cable
- 6, 7: short side of tubing member
- 8, 8'; 9, 9': long side walls of tubing member
- 10: channel of tubing member
- 12: concave shape of long side
- 14: mid-portion of tubing member
- 16,16': side-portion of tubing member
- A: uncompressed condition
- B: compressed condition.
- 18, 18': opening in stator core
- 20: stator core
- 22: one end of the opening
- 24: another end of the opening
- 26: surrounded surfaces of opening
- 28: transverse extension of tubing member
- C1: centre of first side-portion
- C2: centre of second side-portion
- 30: centre axle of tubing member
- 32: radial centre axle of the opening
- 34: conduit for cooling liquid
- 35: wedge shaped member
- 36: central position between two divided opening halves
- 38: grease
- 40: intermediate position at the short end walls
- 42: end fitting
- 44: end of a tubing member
- 46: inlet/outlet for cooling liquid
- R: radial extension of the opening

## Claims

1. Tubing member (2, 2', 2") for cooling and support of high voltage cables (4, 4') used as stator windings inside the stator core (20) of a generator, the tubing member has short and long side walls (6-9) extending in a longitudinal direction, which walls forms a closed, elongated, hollow channel (10) for a cooling liquid, **characterised in that** at least one of the long sides (8, 8') has a concave shape (12) such that a tapering central portion (14) of the channel is formed between the long sides of the tubing, and further that the at least one long side towards the short sides diverge whereby a propagating side-portion (16, 16') of the channel is provided adjacent the short sides (6, 7), respectively.

2. Tubing member according to claim 1, **characterised in that** the other long side (9, 9') has a concave shape (12).

3. Tubing member according to any of the preceding claims, **characterised in that** the transverse extension (28) of the tubing member is asymmetric.

4. Tubing member according to claim 3, **characterised in that** the propagating side-portions (16, 16') of the channel adjacent the short sides, respectively, are displaced relatively a transverse centre axle (30) of the tubing member.

5. Tubing member according to claim 4, **characterised in that** one first side-portion (16) towards one short side (6) has its centre (C1) displaced in the opposite direction, relative the centre axle (30), compared to the centre (C2) of the other second side-portion (16') towards the other short side (7).

6. Tubing member according to claim 1, **characterised in that** the walls (6-9) are made in a semi-conducting material.

7. Tubing member according to claim 1 or 6, **characterised in that** the walls are made in an elastic material.

8. Tubing member according to claim 7, **characterised in that** the elastic material is a plastic such as polyethylene.

9. Arrangement for cooling and support of high voltage cables (4, 4') used as stator windings inside the stator core (20) of a generator, comprising intermediate tubing members (2, 2") arranged in contact with neighbouring cables (4, 4') running inside a plurality of elongated openings (18, 18') formed in the stator core along its longitudinal direction, each tubing member has short and long side walls (6-9) extending in a longitudinal direction, which walls forms a closed, elongated, hollow channel (10) for a cooling liquid, **characterised in that** the long sides of each tubing member has a concave shape (12) which forms a contact surface against each cable (4, 4'), the concave shape forms a tapering central portion (14) of the channel between the long sides (8, 9) of the tubing member, and further that the long sides towards the short sides diverge whereby a propagating side-portion (16, 16') of the channel is provided adjacent the short sides (6, 7), respectively, each short side wall of the tubing member is arranged in contact with the surrounded surfaces (26) in the opening of the stator core.

10. Arrangement according to claim 9, **characterised in that** a radius of the concave long side (12) at compressed state corresponds to a radius of a cable (4, 4') against which concave surface the cable is intended to be arranged.

11. Arrangement according to claim 9 or 10, **characterised in that** the transverse extension (28) of the tubing member is asymmetric.

12. Arrangement according to claim 11, **characterised in that** the propagating side-portions (16, 16') of the channel adjacent the short sides, respectively, are displaced relatively a transverse centre axle (30).

13. Arrangement according to claim 12, **characterised in that** one first side-portion (16) towards one short side (6) has its centre (C1) displaced in the opposite direction, relative the centre axle (30), compared to the centre (C2) of the other second side-portion (16') towards the other short side (7).

14. Arrangement according to claim 9, **characterised in that** the walls are made in a semi-conducting material.

15. Arrangement according to claim 9 or 14, **characterised in that** the walls are made in an elastic material.

16. Arrangement according to claim 15, **characterised in that** the elastic material is a plastic, such as polyethylene.

17. Arrangement according to claim 9, **characterised in that** each propagating side-portion (16, 16') of one tubing member (2) against one side of the cable (4, 4') is arranged in contact to another tubing member (2") arranged on another side of said cable (4, 4').

18. Arrangement according to claim 9, **characterised in that** the cables (4, 4') arranged in each opening (18, 18') of the stator core are asymmetrically positioned along a radial centre axle (32) of the opening.

19. Arrangement according to claim 18, **characterised in that** every other cable (4, 4') is alternately arranged with a displacement at opposite directions relative the centre axle (32).

20. Arrangement according to claim 9, **characterised in that** a conduit (34) for providing cooling liquid to the channel of the tubing member is arranged to each tubing member, respectively.

21. Method for cooling and support of high voltage cables (4, 4') used as stator windings inside the stator core (20) of a generator, the cables are arranged inside a plurality of elongated openings (18, 18') formed in the stator core along its longitudinal direction, the method includes the use of tubing members (2, 2") that has short and long side walls (6-9) extending in a longitudinal direction, which walls forms a closed, elongated, hollow channel (10) for a cooling liquid, the long sides of each tubing member has a concave shape (12), the method comprising the steps of:
arranging each tubing member (2, 2") in between neighbouring cables (4, 4') in each opening (18, 18'),
compressing the tubing members in the opening against the cables by introducing compression means in the opening (18, 18'), such that a close firm contact is maintained between the cable (4, 4') and the concave long side (12) of the tubing as well as between the short sides (6, 7) of the tubing members and the surface of the core (20) in the opening (18, 18'),
supplying a continuous stream of a cooling liquid in the channels (10) whereby heat generated in the cables, as well as heat generated in the stator core, is transferred to, and brought off with, the cooling liquid.

22. Method according to claim 21, **characterised in that** the compression means is a wedge shaped member.

23. Method according to claim 21 or 22, **characterised in that** the compression means is introduced centrally (36) with respect to the radial extension (R) of the opening.

24. Method according to claim 21, **characterised in that** grease (38) based on silicon is introduced in the opening at a position (40) intermediate the short end walls (6, 7) of the tubing and the stator core.
